# EUROPEAN PATENT SPECIFICATION

(11) **EP 3 826 421 B1**
(45) Date of publication and mention of the grant of the patent: **16.03.2022**
(21) Application number: 19210053.5
(22) Date of filing: 19.11.2019
(51) Int. Cl.: H04W 76/15, H04W 28/24, H04W 4/18, H04L 29/08

(54) **TRANSPORTING RADIO NETWORK RELATED INFORMATION TO A DATA CENTER APPLICATION**
TRANSPORT VON FUNKNETZBEZOGENEN INFORMATIONEN ZU EINER RECHENZENTRUMSANWENDUNG
TRANSPORT D'INFORMATIONS RELATIVES AU RÉSEAU RADIO À UNE APPLICATION DE CENTRE DE DONNÉES

(43) Date of publication of application: 26.05.2021
(73) Proprietor: Deutsche Telekom AG, 53113 Bonn (DE)
(72) Inventor: BREITBACH, Johannes Markus, 53227 Bonn (DE); SCHNIEDERS, Dominik, 52078 Aachen (DE)
(74) Representative: Raible Deissler Lehmann Patentanwälte PartG mbB

(56) References cited:
- US-A1- 2015 172 436

## Description

### Field of the Invention

The present invention refers to a method and a system for transporting radio network related information to an application server running in a data center, wherein the application server is in communicative connection with a radio base station of a radio network via at least one fixed network link and the radio base station is configured to communicate with an end user device via at least one radio link over an air interface, thus establishing a communication link between the end user device and the application server via the radio base station as a combination of the at least one fixed network link and the at least one radio link.

The invention further refers to a corresponding non-transitory computer readable medium with a computer program with program codes.

The invention enables a collaboration between an application, i.e. the application server and an underlying cellular communication network, i.e. the radio network.

### Background of the Invention

Today, typically an application is running without any knowledge on a state of an underlying network and assumes the network performance in terms of e.g. data rate and latency is sufficient for the purposes of the application. If performance of the network deteriorates and falls below a certain level, the application stops or crashes. Therefore most applications work with buffers in the devices, i.e. the end user devices and on server-side to overcome network deterioration.

In fixed / optical networks, variations in network performance are usually relatively small; hence network performance is sufficient in the vast majority of cases and crashes of the application are rare.

However, in cellular mobile radio networks, the situation is different: Radio network capacity is a scarce resource, as it has to be shared with multiple other users in a same radio cell. This leads to significant variations in data rate and latency of the network service that can be provided to a user or to his applications. In addition, network performance depends on radio conditions, in particular on a distance between an end user device and a base station antenna, interference from other base stations as well as impairments like shadowing and fading.

If an application would be informed about the state of the radio network, it could adapt its behavior to the radio network and when resources are rare, it could continue to run with a restricted service, instead of crashing completely. Hence, providing information about the state of the radio network to the application would help to overcome the impairments of variations in network load and radio channel conditions, i.e. radio link conditions. Prior art is US2015/0172436 A1.

### Summary of the Invention

Therefore, the present invention refers to a method for transporting radio network related information to an application server running in a data center, wherein the application server is in communicative connection with at least one radio base station of a radio network via at least one fixed network link and the radio base station is configured to communicate with an end user device via at least one radio link over an air interface, thus establishing a communication link between the end user device and the application server via the radio base station as a combination of the at least one fixed network link and the at least one radio link, the method comprising:
a) providing, at the radio base station, an application notification sender which is coupled with a scheduler of the radio base station and configured to access network data which are used by the scheduler to allocate network resources to the end user device,
b) accessing, using the application notification sender, the network data which are used by the scheduler to allocate network resources to the end user device,
c) determining, using the application notification sender and based on the network data which have been accessed, a network service quality for a communication between the application server and the end user device,
d) establishing a control communication link (between the end user device and the application server), the control communication link comprising at least one separate fixed network link from the radio base station to the application server and being configured to only carry data related to the network service quality, and
e) sending, using the control communication link, the determined network service quality for a communication between the application server and the end user device from the application notification sender to the application server.

The application server is running in a data center and communicates with a client running on an end user device, also called mobile terminal device or User Equipment, i.e. UE. The UE is connected to a radio network, i.e. a cellular network. The cellular network is connected via a fixed network, i.e. via fixed network links (in the following also called FL), to the data center where the application server is running.

Each application, i.e. each application server, is configured to send and receive data to and from the at least one radio base station via at least one respective fixed network link between the application server and the at least one radio base station. Each radio base station can also communicate with one or more applications/application servers. Each application, i.e. each application server can also communicate with one or more radio base stations. Further, the radio base station can communicate with one or more end user devices via respective radio links, i.e. each end user device communicates with the radio base station, when the end user device is located in a radio cell of the radio base station, via a respective radio link. It is possible that each fixed network link between the radio base station and a respective application is assigned, particularly exclusively, to a respective end user device, respectively. Usually, each end user device communicates with the radio base station via a respective radio link which is assigned, particularly exclusively, to that end user device.

Within the scope of the present disclosure, a cellular network, also called cellular mobile radio network, is to be understood as a radio network distributed over land areas called cells, each of which has one base station (BS) to serve all user equipments (UEs) operating within that cell. The fixed network may be a wired network, e.g. an Ethernet or a wireless network or a combination of both. The fixed network is also called transport network in the following. The terms "base station" and "radio base station" are used synonymously herein.

The proposed method enables a communication between the scheduler, particularly the application notification sender connected to the scheduler of the at least one radio base station and the application server in the data center. The scheduler manages resources of the radio network and allocates resources to UEs, taking, among others, into account instantaneous amounts of traffic data waiting to be transmitted to / from the UEs in the radio cell which is served by the respective radio base station as well as instantaneous radio channel (also called radio link) conditions of these UEs. From this information, the scheduler can estimate a short-term quality of service that can be provided to a UE. A main property of the proposed method is that it is backwards compatible to LTE and 5G networks as specified in existing 3GPP Releases.

Within the scope of the present disclosure, the wording "a/the application notification sender is coupled to/with a/the scheduler of the radio base station" includes the scenario that the application notification sender is a separate function block/function unit which is in a communicative connection with the scheduler as well as the scenario that the application notification sender is an integral part of the scheduler, i.e. is integrated in the scheduler. A communicative connection can be a wired or a wireless connection or a combination thereof. Each suitable communication technology may be used.

The application server is running in a data center and sends data packets via fixed network links (FLs) to the base station, which forwards them via radio links (RL) over the air interface to the end user device, also called UE. In the scope of the present disclosure, such end-to-end connection is named communication link. For communication in the opposite direction from the UE to the application server, data packets take the same way but in reverse direction. In general, a UE can communicate with multiple applications in parallel, and applications can use multiple FLs towards a base station. All applications are running in one and the same data center or in different data centers. When downlink (DL) data packets arrive at the base station, they are queued. There is one queue per incoming downlink fixed network link (DL FL). The UEs permanently measure the quality of their DL radio channel, i.e. DL radio link (DL RL), each UE having one separate DL radio link, and provide the measurement results as Channel Quality Information (CQI) to the scheduler of the respective radio cell. Based on the received CQIs from all UEs in the radio cell and the filling conditions of all queues, the scheduler decides which UE shall be served in the next DL transmission time slot, how many data shall be transmitted and from which queue the data shall be taken. According to the scheduler's decision, data are forwarded from the selected queue to a DL processing unit of the base station of the radio cell and sent over the air interface to the UE.

The terms "base station" and "radio base station" are used synonymously herein. The terms "radio channel" and "radio link" are used synonymously herein. The terms "application" and "application server" are used synonymously herein.

According to one aspect of the proposed method, the control communication link is setup in a same way as a communication link for carrying user traffic data between the end user device and the application server as described above, but the control communication link is distinguished from such communication link by using a reserved QoS (Quality of Service) type in the setup.

According to one further embodiment of the proposed method, the control communication link is established so that it shares with an established communication link between the end user device and the application server a same radio link on the air interface and that it is carried via the at least one separate fixed network link from the radio base station to the application server.

Further, each of the at least one separate fixed network link from the radio base station to the application server is composed of an uplink fixed network link and a downlink fixed network link. The separate fixed network link is defined by the fact that it is disjoint with any fixed network link which forms part of a normal communication link for carrying user traffic data between the end user device and the application server. That means that both, the uplink fixed network link and the downlink fixed network link of the separate fixed network link are disjoint with any uplink and downlink of any communication link. The control communication link may be an end-to-end connection, but it serves only to carry information about a state of the radio network from the base station to the application server or to the end user device and it is not intended to carry normal user traffic. Both, the communication link and the control communication link share the same radio link on the air interface, but they are carried via separate (disjoint) fixed network links on the fixed network.

By using a reserved QoS type in the setup procedure, the base station is able to recognize when a communication link is intended for control purposes instead for carrying normal traffic from the application server to the UE.

According to still a further embodiment of the proposed method, the uplink fixed network link begins at an uplink processing unit of the base station and the downlink fixed network link is terminated in a queue of the base station, the queue being coupled with a downlink processing unit of the base station, wherein the application notification sender is in conjunction with both, the uplink fixed network link and the queue. In such a scenario, the application notification sender interrupts the uplink fixed network link and injects packets containing information about the determined network service quality, for sending, using the control communication link, the determined network service quality for a communication between the application server and the end user device from the application notification sender to the application server.

The application notification sender (ANS) is closely coupled to the scheduler of a respective base station and can access all the information on which the scheduler's decisions are based. From this information, the ANS estimates the network service quality for the communication between the application server and the UE (served by the respective radio cell associated with the respective base station) that is achievable in the foreseeable future. To notify the application server, the ANS can send this information via the uplink fixed network link to the application server. To notify the UE, the application server inserts the data packets containing this information into the queue associated with the downlink fixed network link, from where these packets are forwarded to the UE via the shared downlink radio link (DL RL). In this implementation option, the FLs for the control communication link are setup like a normal communication link; in particular, the downlink fixed network link is terminated in a queue, and the uplink fixed network link begins at the UL processing unit of the respective base station.

According to still a further aspect, the uplink fixed network link begins at the application notification sender of the base station and the downlink fixed network link is terminated at the application notification sender. The application notification sender is in conjunction with the uplink processing unit of the base station and with a queue which is in downstream direction installed before a downlink processing unit of the base station and retrievable by the downlink processing unit. Thus, the application notification sender is at least indirectly connected to both, the downlink processing unit and the uplink processing unit of the base station. Therefore, the control communication link can be used to exchange information about the determined network service quality and application-related control information between the application notification sender, the application server and the end user device. That means that the application server can send application-related control information to the ANS and the UE, and the UE can send application-related information to the ANS and the application server. In this way, the control communication link can be used to exchange application-related and network-related control information between ANS, application server and UE.

According to still another aspect, the uplink fixed network link begins at the application notification sender and the downlink fixed network link terminates at a packet discarding unit of the base station. In this implementation, neither the downlink fixed network link of the control communication link shall be used by the application server to send data in downlink direction nor the uplink fixed network link of the control communication link shall be used by the UE to send data in uplink direction. In case the application server sends any data packets on the downlink fixed network link, these data packets shall be discarded after arrival in the base station. In uplink direction, the UE shall not transmit any data on the control communication link in uplink direction. Instead the base station can inject data packets in the uplink fixed network link and send them to the application server.

The advantage of the proposed method is that the control communication link can be setup like a normal communication link, using the setup procedures standardized for e.g. LTE or 5G. Interrupting the control communication link in the base station, as proposed in one of the above mentioned embodiments, can be done as part of the base station implementation, which is not subject to standardization anyway. This ensures that the proposed invention is fully compliant to existing LTE and 5G specifications. It may also be used for future specifications.

The present invention also refers to a system for transporting radio network related information to an application server running in a data center, wherein the application server is in communicative connection with at least one radio base station of a radio network via at least one fixed network link and the radio base station is configured to communicate with an end user device via at least one radio link over an air interface, thus establishing a communication link between the end user device and the application server via the radio base station as a combination of the at least one fixed network link and the at least one radio link, the system comprising at least:
A) an application notification sender, the application notification sender being installed in the radio base station and coupled with a scheduler of the radio base station and configured to access network data which are used by the scheduler to allocate network resources to the end user device,
B) at least one processor, which is coupled with the application notification sender and programmed to execute at least the following steps:
   - accessing, using the application notification sender, network data which are used by the scheduler to allocate network resources to the end user device,
   - determining, using the application notification sender and based on the network data which have been accessed, a network service quality for a communication between the application server and the end user device,
   - establishing a control communication link (between the end user device and the application server), the control communication link comprising at least one separate fixed network link from the radio base station to the application server and being configured to only carry data related to the network service quality, and
   - sending, using the control communication link, the determined network service quality for a communication between the application server and the end user device from the application notification sender to the application server.

Within the scope of the present disclosure, the wording "the processor is coupled with/to the application notification sender" includes the scenario that the processor is separate from the application notification sender but in a communicative connection with the application notification sender as well as the scenario that the processor is integrated in the application notification sender, i.e. is an integral part of the application notification sender.

The communicative connection between the at least one processor and the application notification sender within the base station may be a wired or a wireless connection. Each suitable communication technology may be used. The communicative connection between the application server and the base station may also be a wired or a wireless connection. Each suitable communication technology may be used. The application server, i.e. the data center hosting the application server, and the base station, each may include one or more communication interfaces for communicating with each other. Such communication may be executed using a wired data transmission protocol, such as fiber distributed data interface (FDDI), digital subscriber line (DSL), Ethernet, asynchronous transfer mode (ATM), or any other wired transmission protocol. Alternatively, the communication may be wirelessly via wireless communication networks using any of a variety of protocols. The respective communication may be a combination of a wireless and a wired communication.

The data center may be used with or incorporated in a computer system that may be a standalone unit or include one or more remote terminals or devices in communication with a central computer, located, for example, in a public cloud or Multi-Access Edge Computing cloud, via a network such as, for example, the Internet or an intranet. As such, the application server, i.e. the data center hosting the application server described herein and related components may be a portion of a local computer system or a remote computer or an online system or a combination thereof.

According to one aspect, the processor is further configured to execute the following step:
- setting up the control communication link in a same way as a communication link for carrying user traffic data between the end user device and the application server, and distinguished from such communication link by using a reserved QoS type in the setup.

According to still a further embodiment of the proposed system, the processor is further configured to execute the following step:
- establishing the control communication link so that it shares with an established communication link between the end user device and the application server a same radio link on the air interface and so that it is carried via the at least one separate fixed network link from the radio base station to the application server.

In still another embodiment of the proposed system, the processor is further configured to execute the following step:
- setting up each of the at least one separate fixed network link from the radio base station to the application server as a composition of an uplink fixed network link and a downlink fixed network link.

According to another aspect, the processor is further configured to execute the following step:
- setting up the uplink fixed network link beginning at an uplink processing unit of the base station and the downlink fixed network link terminating in a queue of the base station, the queue being coupled with a downlink processing unit of the base station, wherein the application notification sender is in conjunction with both, the uplink fixed network link and the queue.

In still another implementation, the processor is further configured to execute the following step:
- setting up the uplink fixed network link beginning at the application notification sender of the base station and the downlink fixed network link terminating at the application notification sender wherein the application notification sender is in conjunction with both, a downlink processing unit of the base station and an uplink processing unit of the base station, thus the control communication link can be used to exchange information about the determined network service quality and application-related control information between the application notification sender, the application server and the end user device.

The present invention also refers to a non-transitory computer readable medium with a computer program with program codes that are configured, when the computer program is loaded and executed by at least one processor which is in a communicative connection with an application notification sender, the application notification sender being installed in a radio base station of a radio network and coupled with a scheduler of the radio base station, to execute at least the following steps:
- accessing, using the application notification sender, network data which are used by the scheduler to allocate network resources to an end user device,
- determining, using the application notification sender and based on the network data which have been accessed, a network service quality for a communication between an application server running on a data center, and the end user device,
- establishing a control communication link (between the end user device and the application server), the control communication link comprising at least one separate fixed network link from the radio base station to the application server and being configured to only carry data related to the network service quality, and
- sending, using the control communication link, the determined network service quality for a communication between the application server and the end user device from the application notification sender to the application server.

The invention is further defined in the following embodiments. It should be understood that these embodiments, by indicating preferred embodiments of the invention, are given by way of illustration only.

### Brief description of the drawings

- Fig. 1: shows a schematic diagram of a communication system according to the state of the art;
- Fig. 2: shows a schematic diagram of a communication system according to a first embodiment of the proposed system;
- Fig. 3: shows a schematic diagram of a communication system according to a second embodiment of the proposed system;
- Fig. 4: shows a schematic diagram of a communication system according to a third embodiment of the proposed system;

### Detailed description of the drawings

The invention is described in detail by means of exemplary embodiments and with reference to the drawings 2-4. Same reference signs designate same components.

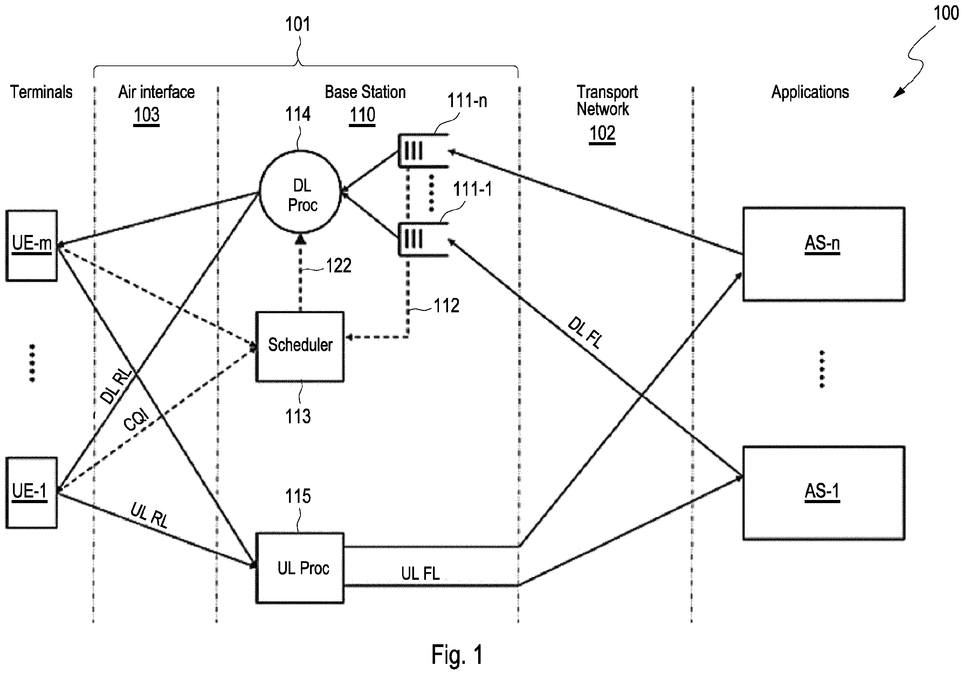

Figure 1 shows schematically a communication system according to the state of the art. The system comprises applications, i.e. application servers AS-1, ...AS-n, running in a data center, an underlying communication network 100 and a plurality of end user devices UE-1, ... UE-m which intend to use at least one of the applications AS-1, ..., AS-n. The communication network 100 is composed of a radio network 101 and a transport network 102. Since the proposed method is applicable to various cellular network standards like LTE and 5G, the terminology used in the following is meant generically and does not relate to a particular standard. Each of the application servers AS-1, ... AS-n is running in a data center. All application servers can run in one and the same data center or the application servers can be distributed over a plurality of different data centers. Each such application server sends data packets via fixed network links DL FLs, i.e. downlink (DL) fixed network links (FL) in the transport network 102 to a base station 110 of the radio network 101, which forwards them via radio links DL RL, i.e. downlink (DL) radio links (RL) over the air interface 103 to a respective UE-1, ...UE-m. As already described before, an end-to-end connection is named communication link. For communication in the opposite direction from a respective UE-1, ... UE-m to at least one of the application servers AS-1, ..., AS-n, data packets take the same way but in reverse direction, i.e. via radio links UL RL, i.e. uplink (UL) radio links (RL) over the air interface 103 to the base station 110 and via fixed network links UL FL, i.e. uplink (UL) fixed network links (FL) in the transport network 102 to one of the application servers AS-1, ..., AS-n. For simplicity and without loss of generality, the Figure 1 shows all UEs UE-1, ...UE-m communicating with one application server AS-1, ...AS-n, and each application server AS-1, ... AS-n is using a single fixed network link FL, composed of a DL FL and a UL FL, towards the base station 110. In general, a UE can communicate with multiple applications, i.e. application servers AS-1, .... AS-n in parallel, and applications, i.e. application servers AS-1, ..., AS-n can use multiple fixed network links FLs towards the base station 110. When downlink (DL) data packets arrive at the base station 110 from one of the application servers AS-1, ...AS-n, they are queued in one of a plurality of queues 111-1, ...,111-n. There is one queue per incoming downlink fixed network link (DL FL). Usually, each queue can be assigned to one end user device UE-1, ..., UE-m.

The end user devices UE-1, ...., UE-m permanently measure a quality of their downlink (DL) radio channel / link (DL RL) and provide the measurement results as Channel Quality Information (CQI) to a scheduler 113 of the base station 110 as indicated by arrows CQI. Based on the received CQIs from all end user devices UE-1, ...., UE-m in the radio cell and the filling conditions of all queues 111-1, ..., 111-n which are provided from the queues 111-1, ...111-n to the scheduler as indicated by arrow 112, the scheduler 113 decides which end user device UE-1, ...., UE-m shall be served in the next downlink (DL) transmission time slot, how many data shall be transmitted and from which queue 111-1, ..., 111-n the data shall be taken. The scheduler 113 forwards its decision to a downlink (DL) processing unit 114 as indicated by arrow 122.

According to a decision of the scheduler 113, data are forwarded from the selected queue 111-1, ..., 111-n to the downlink (DL) processing unit 114 and sent over the air interface 103 to the respective end user device UE-1, ... UE-m. In the reverse direction, each end user device UE-1, ...UE-m can send data packets via an uplink radio link (UL RL) via the radio interface 103 to a uplink processing unit 115 of the base station 110 which forwards the data packets via an uplink fixed network link (UL FL) in the transport network 102 to an addressed application server AS-1, ... AS-n.

Applied to LTE the fixed network links (FL) correspond to PDP (packet data protocol) contexts; applied to 5G, the fixed network links (FL) correspond to PDU (protocol data unit) sessions.

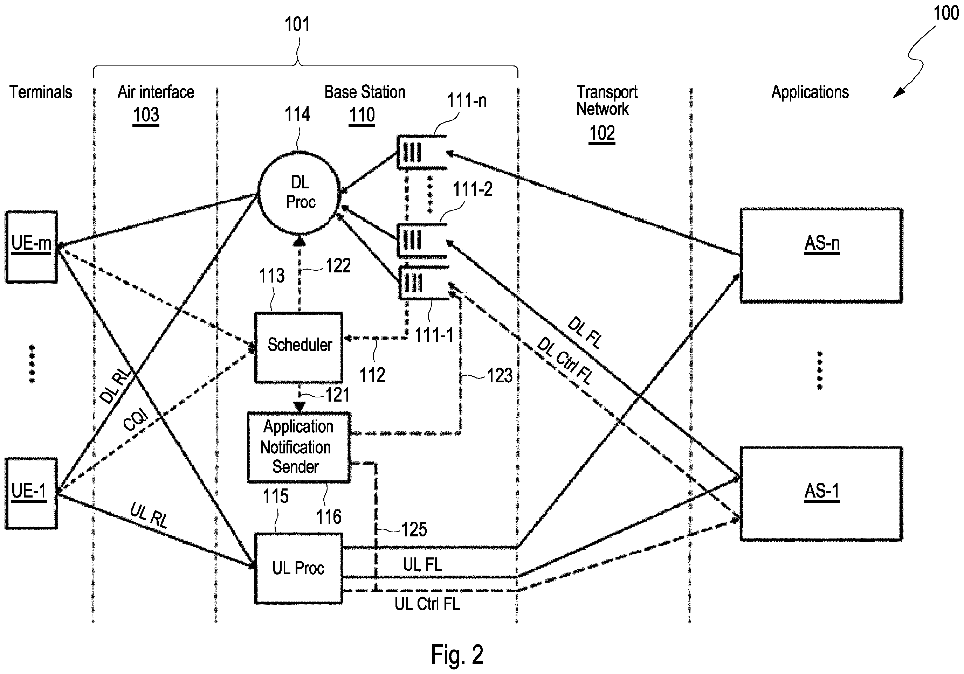

Figure 2 shows a first implementation of the proposed system which is configured to execute a first embodiment of the proposed method. For simplicity, Figure 2 shows that first implementation only for one end user device, namely for UE-1, and one application server, namely AS-1. The system shown in Figure 2 is based on the same setup as in Figure 1. In addition, a second communication link is established between the UE-1 and the application server AS-1. This communication link is named control communication link in the following. It serves only to carry from the base station 110 to the application server AS-1 or to the end user device UE-1 information about the state of the network and it is not intended to carry normal user traffic. Both, the communication link and the control communication link are composed of an uplink UL and a downlink DL. Each uplink UL is composed of an uplink radio link UL RL and an uplink fixed network link UL FL. Each downlink is composed of a downlink radio link DL RL and a downlink fixed network link DL FL. Both, the communication link and the control communication link share the same radio link RL on the air interface 103, but they are carried via separate fixed network links FLs on the fixed network, i.e. the transport network 102. Each fixed network link FL is composed of an uplink fixed network link UL FL and a downlink fixed network link DL FL. The fixed network links FLs for the control communication link, i.e. the uplink fixed network link and the downlink fixed network link are marked as DL Ctrl FL and UL Ctrl FL in the Figure 2.

The control communication link is intended for communication between the application server AS-1 and the base station 110. Nevertheless it shall be setup in the same way as a normal communication link for carrying user traffic data, and thus formally it is an end-to-end communication link between application server AS-1 and end user device UE-1. By using a reserved QoS type in the setup procedure, the base station 110 will be able to recognize when a communication link is intended for control purposes instead for carrying normal traffic from the application server AS-1 to the end user device UE-1. Then, an application notification sender 116 of the base station 110 receives from scheduler 113 of the base station 110 CQIs and filling conditions of all queues 111-1,..., 111-n, both being beforehand gathered and merged by scheduler 113. Based thereon, the ANS 116 determines a network service quality of the underlying network 100. Then, the ANS 116 can interrupt, as indicated by dashed line 125, this end-to-end control communication link and inject packets containing information about the network service quality into the UL Ctrl FL.

The application notification sender 116 is closely coupled to the scheduler 113 and can access all the information on which the decisions of the scheduler 113 are based as indicated by arrow 121. From this information, the application notification sender 116 estimates the network service quality for the communication between application server AS-1 and end user device UE-1 that is achievable in the foreseeable future. To notify the application server AS-1, the application notification sender 116 can send this information via the UL Ctrl FL to the application server AS-1. To notify the end user device UE-1, the application server AS-1 inserts, as indicated by arrow 123, the data packets containing this information into the queue 111-1 associated with the DL Ctrl FL, from where these packets are forwarded from the downlink processing unit 114 to the end user device UE-1 via the DL RL.

The advantage of the proposed invention is that the control communication flow can be setup like a normal communication link, using the setup procedures standardized for e.g. LTE or 5G. Interrupting the control communication link in the base station 110 can be done as part of the base station implementation, which is not subject to standardization anyway. This ensures that the proposed method and system are fully compliant to existing LTE and 5G specifications.

In the first implementation shown in Figure 2, the FLs for the control communication link are setup like a normal communication link; in particular, the DL Ctrl FL is terminated in a queue 111-1, and the UL Ctrl FL begins at the UL processing unit 115.

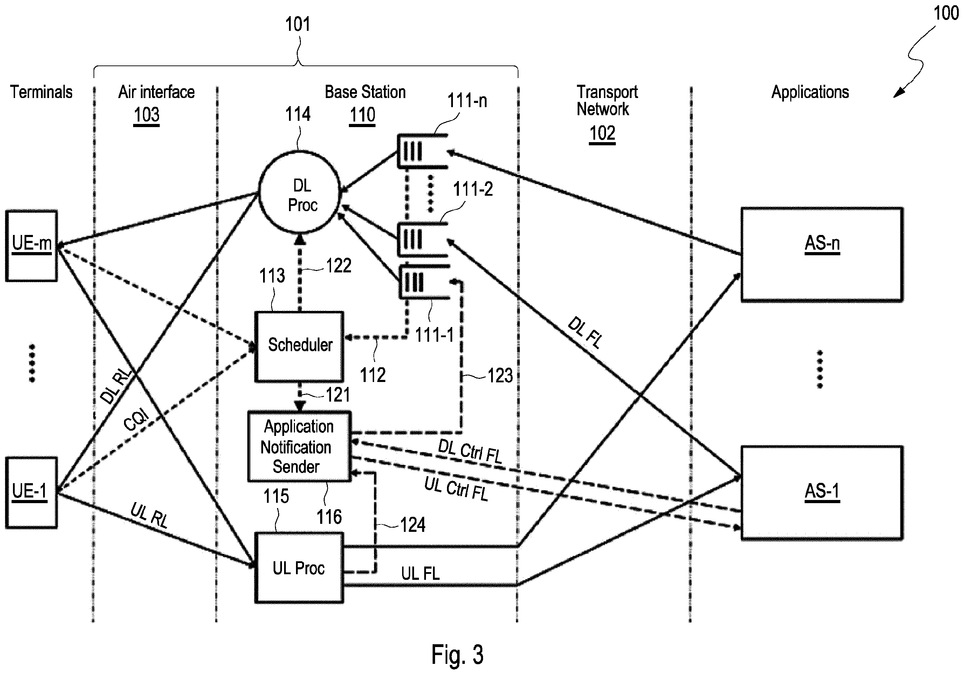

Figure 3 shows an alternative second implementation, where the DL Ctrl FL is terminated at the application notification sender 116 and the UL Ctrl FL begins at the application notification sender 116.

Again, the application notification sender 116 receives from scheduler 113 of the base station 110 CQIs and filling conditions of all queues 111-1,..., 111-n, both being beforehand gathered and merged by scheduler 113. Based thereon, the ANS 116 determines a network service quality of the underlying network 100. Then, the ANS 116 can provide information on the estimated network service quality to the application server AS-1 and the end user device UE-1. In addition, the application server AS-1 can send application-related control information to the application notification sender 116 and the end user device UE-1 as indicated by DL Ctrl FL, arrow 123 and DL RL, and the end user device UE-1 can send application-related information to application notification sender 116 and application server AS-1 as indicated by UL RL, arrow 124 and UL Ctrl FL. In this way, the control communication link can be used to exchange application-related and network-related control information between application notification sender 116, application server AS-1 and end user device UE-1.

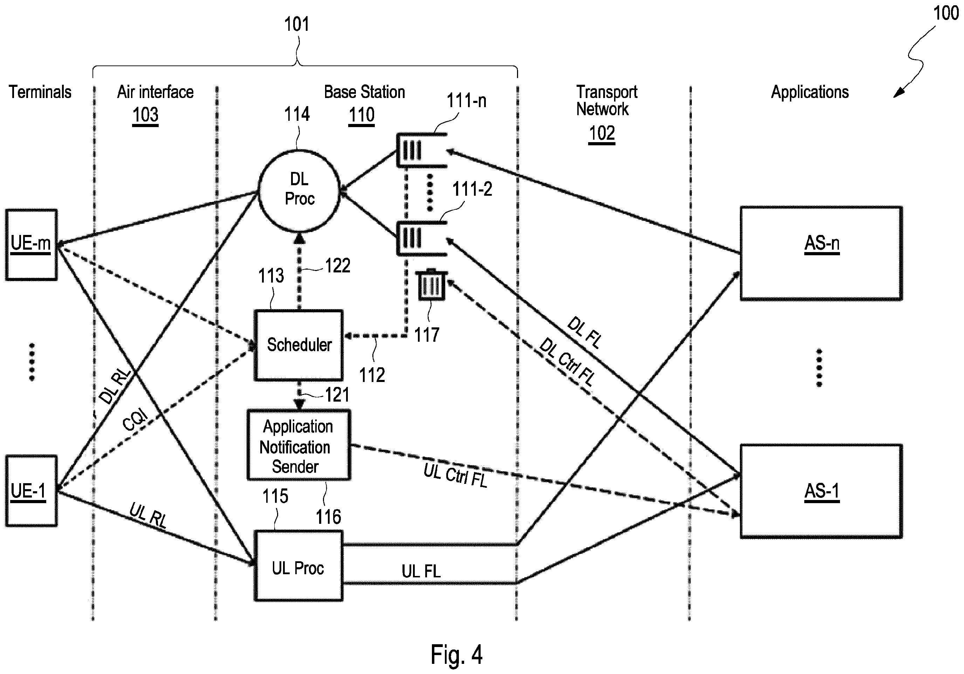

For the case where only network-related information is sent from the application notification sender 116 to the application server AS-1, the system can be simplified as shown in Figure 4. In this implementation, neither the downlink network link DL of the control communication link shall be used by the application server AS-1 to send data in downlink direction nor the uplink network link of the control communication link shall be used by the end user device UE-1 to send data in uplink direction. In case the application server AS-1 sends any data packets on the DL Ctrl FL, these data packets shall be discarded after arrival in the base station 110 as indicated by refuse bin 117. In UL direction, the end user device UE-1 shall not transmit any data on the control communication link in UL direction. Instead the base station 110, particularly the application notification sender 116 can inject data packets in the UL Ctrl FL and send them to the application server AS-1.

### List of reference signs

- UE-1: end user device

- UE-m: end user device

- AS-1: application server

- AS-n: application server

- 100: network
- 101: radio network
- 102: transport network / fixed network
- 103: air interface
- 110: radio base station / base station
- 111-1: queue

- 111-n: queue

- 112: arrow
- 113: scheduler
- 114: downlink processing unit
- 115: uplink processing unit
- 116: application notification sender
- 117: refuse bin
- 121: arrow
- 122: arrow
- 123: arrow
- 124: arrow
- 125: dashed line
- DL RL: downlink radio link
- UL RL: uplink radio link
- CQI: communication quality information
- DL FL: downlink fixed network link
- DL Ctrl FL: downlink control fixed network link
- UL FL: uplink fixed network link
- UL Ctrl FL: uplink control fixed network link

## Claims

1. A method for transporting radio network related information to an application server running in a data center, wherein the application server is in communicative connection with a radio base station of a radio network via at least one fixed network link and the radio base station is configured to communicate with an end user device via at least one radio link over an air interface, thus establishing a communication link between the end user device and the application server via the radio base station as a combination of the at least one fixed network link and the at least one radio link, the method comprising:
a) providing at the radio base station an application notification sender which is coupled with a scheduler of the radio base station,
b) accessing, using the application notification sender, network data which are used by the scheduler to allocate network resources to the end user device,
c) determining, using the application notification sender and based on the network data which have been accessed, a network service quality for a communication between the application server and the end user device,
d) establishing a control communication link between the end user device and the application server, the control communication link comprising at least one separate fixed network link from the radio base station to the application server and being configured to only carry data related to the network service quality, and
e) sending, using the control communication link, the determined network service quality for a communication between the application server and the end user device from the application notification sender to the application server.

2. The method according to claim 1, wherein the control communication link is setup in a same way as a communication link for carrying user traffic data between the end user device and the application server, and distinguished from such communication link by using a reserved QoS type in the setup.

3. The method according to claim 2 wherein the control communication link is established so that it shares with an established communication link between the end user device and the application server a same radio link on the air interface and so that it is carried via the at least one separate fixed network link from the radio base station to the application server.

4. The method according to any one of claims 2 or 3 wherein each of the at least one separate fixed network link from the radio base station to the application server is composed of a uplink network link and a downlink network link.

5. The method according to claim 4 wherein the uplink network link begins at a uplink processing unit of the base station and the downlink network link is terminated in a queue of the radio base station, the queue being coupled with a downlink processing unit of the radio base station, wherein the application notification sender is in conjunction with both, the uplink network link and the queue.

6. The method according to claim 5, wherein, for sending, using the control communication link, the determined network service quality for a communication between the application server and the end user device from the application notification sender to the application server, the application notification sender interrupts the uplink network link and injects packets containing information about the determined network service quality.

7. The method according to claim 4 wherein the uplink network link begins at the application notification sender of the base station and the downlink network link is terminated at the application notification sender wherein the application notification sender is in conjunction with both, a downlink processing unit of the radio base station and a uplink processing unit of the radio base station, thus the control communication link can be used to exchange information about the determined network service quality and application-related control information between the application notification sender, the application server and the end user device.

8. The method according to claim 4 wherein the uplink network link begins at the application notification sender and the downlink network link terminates at a packet discarding unit of the radio base station.

9. A system for transporting radio network related information to an application server (AS-1,..., AS-n) running in a data center, wherein the application server (AS-1,..., AS-n) is in communicative connection with a radio base station (110) of a radio network (101) via at least one fixed network link (UL FL, DL FL) and the radio base station (110) is configured to communicate with an end user device (UE-1,..., UE-m) via at least one radio link (UL RL, DL RL) over an air interface (103), thus establishing a communication link between the end user device (UE-1,..., UE-m) and the application server (AS-1,..., AS-n) via the radio base station (110) as a combination of the at least one fixed network link (DL FL, UL FL) and the at least one radio link (DL RL, UL RL), the system comprising at least:
A) an application notification sender (116), the application notification sender (116) being installed at the radio base station (110) and coupled with a scheduler (113) of the radio base station (110) and configured to access network data which are used by the scheduler (113) to allocate network resources to the at least one end user device (UE-1,..., UE-m),
B) at least one processor, which is in communicative connection with the application notification sender (116) and programmed to execute at least the following steps:
- accessing, using the application notification sender (116), network data which are used by the scheduler (113) to allocate network resources to the end user device (UE-1,..., UE-m),
- determining, using the application notification sender (116) and based on the network data which have been accessed, a network service quality for a communication between the application server (AS-1,..., AS-n) and the end user device (UE-1,..., UE-m),
- establishing a control communication link between the end user device (UE-1,..., UE-m) and the application server (AS-1,..., AS-n), the control communication link comprising at least one separate fixed network link from the radio base station (110) to the application server (AS-1,..., AS-n) and being configured to only carry data related to the network service quality, and
- sending, using the control communication link, the determined network service quality for a communication between the application server (AS-1,..., AS-n) and the end user device (UE-1,..., UE-m) from the application notification sender (116) to the application server (AS-1,..., AS-n).

10. The system according to claim 9, wherein the processor is further configured to execute the following step:
- setting up the control communication link in a same way as a communication link for carrying user traffic data between the end user device (UE-1,..., UE-m) and the application server (AS-1,..., AS-n), and distinguished from such communication link by using a reserved QoS type in the setup.

11. The system according to claim 10, wherein the processor is further configured to execute the following step:
- establishing the control communication link so that it shares with an established communication link between the end user device (UE-1,..., UE-m) and the application server (AS-1,..., AS-n) a same radio link on the air interface (103) and so that it is carried via the at least one separate fixed network link from the radio base station (110) to the application server (AS-1,..., AS-n).

12. The system according to claim 11, wherein the processor is further configured to execute the following step:
- setting up each of the at least one separate fixed network link from the radio base station (110) to the application server (AS-1,..., AS-n) as a composition of a uplink fixed network link and a downlink fixed network link.

13. The system according to claim 12, wherein the processor is further configured to execute the following step:
- setting up the uplink fixed network link beginning at a uplink processing unit (115) of the radio base station (110) and the downlink fixed network link terminating in a queue (111-1,..., 111-n) of the radio base station (110), the queue (111-1,..., 111-n) being coupled with a downlink processing unit (114) of the radio base station (110), wherein the application notification sender (116) is in conjunction with both, the uplink fixed network link and the queue (111-1,..., 111-n).

14. The system according to claim 12, wherein the processor is further configured to execute the following step:
- setting up the uplink fixed network link beginning at the application notification sender (116) of the radio base station (110) and the downlink fixed network link terminating at the application notification sender (116) wherein the application notification sender (116) is in conjunction with both, a downlink processing unit (114) of the radio base station (110) and a uplink processing unit (115) of the radio base station (110), thus the control communication link can be used to exchange information about the determined network service quality and application-related control information between the application notification sender (116), the application server (AS-1,..., AS-n) and the end user device (UE-1,..., UE-m).

15. Non-transitory computer readable medium with a computer program with program codes that are configured, when the computer program is loaded and executed by at least one processor which is in a communicative connection with an application notification sender, the application notification sender being installed at a radio base station of a radio network and coupled with a scheduler of the radio base station, to execute at least the following steps:
- accessing, using the application notification sender, network data which are used by the scheduler to allocate network resources to an end user device,
- determining, using the application notification sender and based on the network data which have been accessed, a network service quality for a communication between an application server running on a data center, and an end user device,
- establishing a control communication link between the end user device and the application server, the control communication link comprising at least one separate fixed network link from the radio base station to the application server and being configured to only carry data related to the network service quality, and
- sending, using the control communication link, the determined network service quality for a communication between the application server and the end user device from the application notification sender to the application server.

## Patentansprüche

1. Verfahren zum Transportieren von funknetzbezogenen Informationen zu einem Anwendungsserver, der in einem Datenzentrum läuft, wobei der Anwendungsserver mit einer Funkbasisstation eines Funknetzwerks über mindestens eine Festnetzverbindung in einer kommunikativen Verbindung steht und die Funkbasisstation so konfiguriert ist, dass sie mit einem Endnutzergerät über mindestens eine Funkverbindung über eine Luftschnittstelle kommuniziert, wodurch eine Kommunikationsverbindung zwischen dem Endnutzergerät und dem Anwendungsserver über die Funkbasisstation als eine Kombination aus der mindestens einen Festnetzverbindung und der mindestens einen Funkverbindung hergestellt wird, wobei das Verfahren Folgendes umfasst:
a) Bereitstellen eines Senders für Anwendungsbenachrichtigungen an der Funkbasisstation, der mit einem Scheduler der Funkbasisstation gekoppelt ist,
b) Zugreifen auf Netzwerkdaten, die vom Scheduler verwendet werden, um dem Endnutzergerät Netzressourcen zuzuweisen, unter Verwendung des Senders für Anwendungsbenachrichtigungen
c) Bestimmen einer Netzdienstqualität für eine Kommunikation zwischen dem Anwendungsserver und dem Endnutzergerät unter Verwendung des Senders für Anwendungsbenachrichtigungen und auf der Grundlage der Netzwerkdaten, auf die zugegriffen wurde,
d) Herstellen einer Steuerkommunikationsverbindung zwischen dem Endnutzergerät und dem Anwendungsserver, wobei die Steuerkommunikationsverbindung mindestens eine separate Festnetzverbindung von der Funkbasisstation zum Anwendungsserver umfasst und so konfiguriert ist, dass sie nur Daten bezüglich der Netzdienstqualität überträgt, und
e) Senden der ermittelten Netzdienstqualität für eine Kommunikation zwischen dem Anwendungsserver und dem Endnutzergerät von dem Sender für Anwendungsbenachrichtigungen an den Anwendungsserver unter Verwendung der Steuerkommunikationsverbindung.

2. Verfahren nach Anspruch 1, wobei die Steuerkommunikationsverbindung auf dieselbe Weise wie eine Kommunikationsverbindung zum Übertragen von Benutzerverkehrsdaten zwischen dem Endnutzergerät und dem Anwendungsserver eingerichtet ist und sich von einer solchen Kommunikationsverbindung dadurch unterscheidet, dass ein reservierter QoS-Typ bei der Einrichtung verwendet wird.

3. Verfahren nach Anspruch 2, wobei die Steuerkommunikationsverbindung so hergestellt wird, dass sie sich mit einer zwischen dem Endnutzergerät und dem Anwendungsserver hergestellten Kommunikationsverbindung dieselbe Funkverbindung auf der Luftschnittstelle teilt und dass sie über die mindestens eine separate Festnetzverbindung von der Funkbasisstation zum Anwendungsserver übertragen wird.

4. Verfahren nach einem der Ansprüche 2 oder 3, wobei jede der mindestens einen separaten Festnetzverbindung von der Funkbasisstation zum Anwendungsserver aus einer Uplink-Netzverbindung und einer Downlink-Netzverbindung besteht.

5. Verfahren nach Anspruch 4, wobei die Uplink-Netzverbindung an einer Uplink-Verarbeitungseinheit der Basisstation beginnt und die Downlink-Netzverbindung in einer Warteschlange der Funkbasisstation endet, wobei die Warteschlange mit einer Downlink-Verarbeitungseinheit der Funkbasisstation gekoppelt ist, wobei der Sender für Anwendungsbenachrichtigungen sowohl mit der Uplink-Netzverbindung als auch mit der Warteschlange in Verbindung steht.

6. Verfahren nach Anspruch 5, wobei der Sender für Anwendungsbenachrichtigungen zum Senden der ermittelten Netzdienstqualität für eine Kommunikation zwischen dem Anwendungsserver und dem Endnutzergerät vom Sender für Anwendungsbenachrichtigungen an den Anwendungsserver unter Verwendung der Steuerkommunikationsverbindung die Uplink-Netzverbindung unterbricht und Pakete injiziert, die Informationen über die ermittelte Netzdienstqualität enthalten.

7. Verfahren nach Anspruch 4, wobei die Uplink-Netzverbindung an dem Sender für Anwendungsbenachrichtigungen der Basisstation beginnt und die Downlink-Netzverbindung an dem Sender für Anwendungsbenachrichtigungen endet, wobei der Sender für Anwendungsbenachrichtigungen sowohl mit einer Downlink-Verarbeitungseinheit der Funkbasisstation als auch mit einer Uplink-Verarbeitungseinheit der Funkbasisstation in Verbindung steht, sodass die Steuerkommunikationsverbindung verwendet werden kann, um Informationen über die ermittelte Netzdienstqualität und anwendungsbezogene Steuerinformationen zwischen dem Sender für Anwendungsbenachrichtigungen, dem Anwendungsserver und dem Endnutzergerät auszutauschen.

8. Verfahren nach Anspruch 4, wobei die Uplink-Netzverbindung am Sender für Anwendungsbenachrichtigungen beginnt und die Downlink-Netzverbindung an einer Paketverwerfungseinheit der Funkbasisstation endet.

9. System zum Transportieren von funknetzbezogenen Informationen zu einem Anwendungsserver (AS-1,..., AS-n), der in einem Datenzentrum läuft, wobei der Anwendungsserver (AS-1,..., AS-n) mit einer Funkbasisstation (110) eines Funknetzwerks (101) über mindestens eine Festnetzverbindung (UL FL, DL FL) in einer kommunikativen Verbindung steht und die Funkbasisstation (110) so konfiguriert ist, dass sie mit einem Endnutzergerät (UE-1,..., UE-m) über mindestens eine Funkverbindung (UL RL, DL RL) über eine Luftschnittstelle (103) kommuniziert, wodurch eine Kommunikationsverbindung zwischen dem Endnutzergerät (UE-1,..., UE-m) und dem Anwendungsserver (AS-1,.., AS-n) über die Funkbasisstation (110) als eine Kombination aus der mindestens einen Festnetzverbindung (DL FL, UL FL) und der mindestens einen Funkverbindung (DL RL, UL RL) hergestellt wird, wobei das System mindestens Folgendes umfasst:
A) einen Sender für Anwendungsbenachrichtigungen (116), wobei der Sender für Anwendungsbenachrichtigungen (116) an der Funkbasisstation (110) installiert und mit einem Scheduler (113) der Funkbasisstation (110) gekoppelt ist und so konfiguriert ist, dass er auf Netzwerkdaten zugreift, die von dem Scheduler (113) verwendet werden, um dem mindestens einem Endnutzergerät (UE-1, ..., UE-m) Netzwerkressourcen zuzuweisen,
B) mindestens einen Prozessor, der in kommunikativer Verbindung mit dem Sender für Anwendungsbenachrichtigungen (116) steht und so programmiert ist, dass er mindestens die folgenden Schritte ausführt:
- Zugreifen auf Netzwerkdaten, die vom Scheduler (113) verwendet werden, um dem Endnutzergerät (UE-1,..., UE-m) Netzressourcen zuzuweisen, unter Verwendung des Senders für Anwendungsbenachrichtigungen (116),
- Bestimmen einer Netzdienstqualität für eine Kommunikation zwischen dem Anwendungsserver (AS-1,..., AS-n) und dem Endnutzergerät (UE-1,..., UE-m) unter Verwendung des Senders für Anwendungsbenachrichtigungen (116) und auf der Grundlage der Netzwerkdaten, auf die zugegriffen wurde,
- Herstellen einer Steuerkommunikationsverbindung zwischen dem Endnutzergerät (UE-1,..., UE-m) und dem Anwendungsserver (AS-1,..., AS-n), wobei die Steuerkommunikationsverbindung mindestens eine separate Festnetzverbindung von der Funkbasisstation (110) zum Anwendungsserver (AS-1,..., AS- n) umfasst und so konfiguriert ist, dass sie nur Daten bezüglich der Netzdienstqualität überträgt, und
- Senden der ermittelten Netzdienstqualität für eine Kommunikation zwischen dem Anwendungsserver (AS-1,..., AS-n) und dem Endnutzergerät (UE-1,..., UE-m) von dem Sender für Anwendungsbenachrichtigungen (116) an den Anwendungsserver (AS-1,..., AS-n), unter Verwendung der Steuerkommunikationsverbindung.

10. System nach Anspruch 9, wobei der Prozessor ferner so konfiguriert ist, dass er den folgenden Schritt ausführt:
- Einrichten der Steuerkommunikationsverbindung auf die gleiche Weise wie eine Kommunikationsverbindung zum Übertragen von Benutzerverkehrsdaten zwischen dem Endnutzergerät (UE-1,..., UE-m) und dem Anwendungsserver (AS-1,..., AS-n) und von einer solchen Kommunikationsverbindung dadurch unterschieden, dass ein reservierter QoS-Typ bei der Einrichtung verwendet wird.

11. System nach Anspruch 10, wobei der Prozessor ferner so konfiguriert ist, dass er den folgenden Schritt ausführt:
- Herstellen der Steuerkommunikationsverbindung, so dass sie sich mit einer hergestellten Kommunikationsverbindung zwischen dem Endnutzergerät (UE-1,..., UE- m) und dem Anwendungsserver (AS-1,..., AS-n) eine selbe Funkverbindung (110) auf der Luftschnittstelle (103) teilt und dass sie über die mindestens eine separate Festnetzverbindung von der Funkbasisstation (110) zum Anwendungsserver (AS-1,..., AS-n) übertragen wird.

12. System nach Anspruch 11, wobei der Prozessor ferner so konfiguriert ist, dass er den folgenden Schritt ausführt:
- Einrichten jeder der mindestens einen separaten Festnetzverbindung von der Funkbasisstation (110) zum Anwendungsserver (AS-1, ..., AS-n) als eine Zusammensetzung aus einer Uplink-Festnetzverbindung und einer Downlink-Festnetzverbindung.

13. System nach Anspruch 12, wobei der Prozessor ferner so konfiguriert ist, dass er den folgenden Schritt ausführt:
- Einrichten der Uplink-Festnetzverbindung, die an einer Uplink-Verarbeitungseinheit (115) der Funkbasisstation (110) beginnt, und der Downlink-Festnetzverbindung, die in einer Warteschlange (111-1,..., 111-n) der Funkbasisstation (110) endet, wobei die Warteschlange (111-1,..., 111-n) mit einer Downlink-Verarbeitungseinheit (114) der Funkbasisstation (110) gekoppelt ist, wobei der Sender für Anwendungsbenachrichtigungen (116) sowohl mit der Uplink-Festnetzverbindung als auch mit der Warteschlange (111-1,..., 111-n) in Verbindung steht.

14. System nach Anspruch 12, wobei der Prozessor ferner so konfiguriert ist, dass er den folgenden Schritt ausführt:
- Einrichten der Uplink-Festnetzverbindung, die an dem Sender für Anwendungsbenachrichtigungen (116) der Funkbasisstation (110) beginnt, und der Downlink-Festnetzverbindung, die an dem Sender für Anwendungsbenachrichtigungen (116) endet, wobei der Sender für Anwendungsbenachrichtigungen (116) sowohl mit einer Downlink-Verarbeitungseinheit (114) der Funkbasisstation (110) als auch mit einer Uplink-Verarbeitungseinheit (115) der Funkbasisstation (110) in Verbindung steht, sodass die Steuerkommunikationsverbindung verwendet werden kann, um Informationen über die ermittelte Netzdienstqualität und anwendungsbezogene Steuerinformationen zwischen dem Sender für Anwendungsbenachrichtigungen (116), dem Anwendungsserver (AS-1,...., AS-n) und dem Endnutzergerät (UE-1,..., UE-m) auszutauschen.

15. Nichtflüchtiges computerlesbares Medium mit einem Computerprogramm mit Programmcodes, die so konfiguriert sind, dass sie, wenn das Computerprogramm geladen und von mindestens einem Prozessor ausgeführt wird, der in einer kommunikativen Verbindung mit einem Sender für Anwendungsbenachrichtigungen steht, wobei der Sender für Anwendungsbenachrichtigungen an einer Funkbasisstation eines Funknetzwerks installiert und mit einem Scheduler der Funkbasisstation gekoppelt ist, mindestens die folgenden Schritte ausführen:
- Zugreifen unter Verwendung des Senders für Anwendungsbenachrichtigung auf Netzwerkdaten, die vom Scheduler verwendet werden, um einem Endnutzergerät Netzressourcen zuzuweisen,
- Bestimmen einer Netzdienstqualität für eine Kommunikation zwischen einem Anwendungsserver, der in einem Datenzentrum läuft, und einem Endnutzergerät unter Verwendung des Senders für Anwendungsbenachrichtigungen und auf der Grundlage der Netzwerkdaten, auf die zugegriffen wurde,
- Herstellen einer Steuerkommunikationsverbindung zwischen dem Endnutzergerät und dem Anwendungsserver, wobei die Steuerkommunikationsverbindung mindestens eine separate Festnetzverbindung von der Funkbasisstation zum Anwendungsserver umfasst und so konfiguriert ist, dass sie nur Daten bezüglich der Netzdienstqualität überträgt, und
- Senden der ermittelten Netzdienstqualität für eine Kommunikation zwischen dem Anwendungsserver und dem Endnutzergerät von dem Sender für Anwendungsbenachrichtigungen an den Anwendungsserver unter Verwendung der Steuerkommunikationsverbindung.

## Revendications

1. Procédé de transport d'informations relatives au réseau radio à un serveur d'application fonctionnant dans un centre de données, le serveur d'application étant en connexion de communication avec une station de base radio d'un réseau radio par l'intermédiaire d'au moins une liaison de réseau fixe et la station de base radio étant configurée pour communiquer avec un dispositif utilisateur final par l'intermédiaire d'au moins une liaison radio via une interface hertzienne, établissant ainsi une liaison de communication entre le dispositif utilisateur final et le serveur d'application par l'intermédiaire de la station de base radio en tant que combinaison de la au moins une liaison de réseau fixe et de la au moins une liaison radio, le procédé comprenant les étape suivantes :
a) fournir au niveau de la station de base radio un expéditeur de notification d'application qui est couplé à un planificateur de la station de base radio,
b) accéder, à l'aide de l'expéditeur de notification d'application, à des données de réseau qui sont utilisées par le planificateur pour allouer les ressources de réseau au dispositif utilisateur final,
c) déterminer, à l'aide de l'expéditeur de notification d'application et sur la base des données de réseau qui ont été accédées, une qualité de service de réseau pour une communication entre le serveur d'application et le dispositif utilisateur final,
d) établir une liaison de communication de contrôle entre le dispositif utilisateur final et le serveur d'application, la liaison de communication de contrôle comprenant au moins une liaison de réseau fixe séparée de la station de base radio au serveur d'application et étant configurée pour transporter uniquement des données relatives à la qualité de service de réseau, et
e) envoyer, à l'aide de la liaison de communication de contrôle, la qualité de service de réseau déterminée pour une communication entre le serveur d'application et le dispositif utilisateur final de l'expéditeur de notification d'application au serveur d'application.

2. Procédé selon la revendication 1, la liaison de communication de contrôle étant configurée de la même manière qu'une liaison de communication pour transporter des données de trafic d'utilisateur entre le dispositif utilisateur final et le serveur d'application, et se distinguant d'une telle liaison de communication par utilisation d'un type de QoS réservé dans la configuration.

3. Procédé selon la revendication 2, la liaison de communication de contrôle étant établie de sorte qu'elle partage avec une liaison de communication établie entre le dispositif utilisateur final et le serveur d'application une même liaison radio via l'interface hertzienne et de sorte qu'elle soit transportée de la station de base radio au serveur d'application par l'intermédiaire de l'au moins une liaison de réseau fixe séparée.

4. Procédé selon l'une quelconque des revendications 2 ou 3, chacune de la au moins une liaison de réseau fixe séparée de la station de base radio au serveur d'application étant composée d'une liaison réseau montante et d'une liaison réseau descendante.

5. Procédé selon la revendication 4, la liaison réseau montante commençant au niveau d'une unité de traitement de liaison montante de la station de base et la liaison réseau descendante se terminant dans une file d'attente de la station de base radio, la file d'attente étant couplée à une unité de traitement de liaison descendante de la station de base radio, l'expéditeur de notification d'application étant associé à la fois à la liaison réseau montante et à la file d'attente.

6. Procédé selon la revendication 5, pour envoyer, à l'aide de la liaison de communication de contrôle, la qualité de service de réseau déterminée pour une communication entre le serveur d'application et le dispositif utilisateur final de l'expéditeur de notification d'application au serveur d'application, l'expéditeur de notification d'application interrompant la liaison réseau montante et injectant des paquets contenant des informations sur la qualité de service de réseau déterminée.

7. Procédé selon la revendication 4, la liaison réseau montante commençant au niveau de l'expéditeur de notification d'application de la station de base et la liaison réseau descendante se terminant au niveau de l'expéditeur de notification d'application, l'expéditeur de notification d'application étant associé à la fois à une unité de traitement de liaison descendante de la station de base radio et à une unité de traitement de liaison montante de la station de base radio, de sorte que la liaison de communication de contrôle puisse être utilisée pour échanger des informations sur la qualité de service de réseau déterminée et des informations de contrôle relatives à l'application entre l'expéditeur de notification d'application, le serveur d'application et le dispositif utilisateur final.

8. Procédé selon la revendication 4, la liaison réseau montante commençant au niveau de l'expéditeur de notification d'application et la liaison de réseau descendante se terminant au niveau d'une unité de rejet de paquets de la station de base radio.

9. Système de transport d'informations relatives au réseau radio à un serveur d'application (AS-1, ..., AS-n) fonctionnant dans un centre de données, le serveur d'application (AS-1, ..., AS-n) étant en connexion de communication avec une station de base radio (110) d'un réseau radio (101) par l'intermédiaire d'au moins une liaison de réseau fixe (UL FL, DL FL) et la station de base radio (110) étant configurée pour communiquer avec un dispositif utilisateur final (UE-1, ..., UE-m) par l'intermédiaire d'au moins une liaison radio (UL RL, DL RL) via une interface hertzienne (103), établissant ainsi une liaison de communication entre le dispositif utilisateur final (UE-1, ..., UE-m) et le serveur d'application (AS-1, ..., AS-n) par l'intermédiaire de la station de base radio (110) en tant que combinaison de la au moins une liaison de réseau fixe (DL FL, UL FL) et de la au moins une liaison radio (DL RL, UL RL), le système comprenant au moins :
A) un expéditeur de notification d'application (116), l'expéditeur de notification d'application (116) étant installé au niveau de la station de base radio (110) et couplé à un planificateur (113) de la station de base radio (110) et configuré pour accéder à des données de réseau qui sont utilisées par le planificateur (113) pour allouer les ressources de réseau au au moins un dispositif utilisateur final (UE-1, ..., UE-m),
B) au moins un processeur, qui est en connexion de communication avec l'expéditeur de notification d'application (116) et programmé pour exécuter au moins les étapes suivantes :
- accéder, à l'aide de l'expéditeur de notification d'application (116), à des données de réseau qui sont utilisées par le planificateur (113) pour allouer les ressources de réseau au dispositif utilisateur final (UE-1,..., UE-m),
- déterminer, à l'aide de l'expéditeur de notification d'application (116) et sur la base des données de réseau qui ont été accédées, une qualité de service de réseau pour une communication entre le serveur d'application (AS-1,...., AS-n) et le dispositif utilisateur final (UE-1 UE-m),
- établir une liaison de communication de contrôle entre le dispositif utilisateur final (UE-1,..., UE-m) et le serveur d'application (AS-1,..., AS-n), la liaison de communication de contrôle comprenant au moins une liaison de réseau fixe séparée de la station de base radio (110) au serveur d'application (AS-1,..., AS- n) et étant configurée pour transporter uniquement des données relatives à la qualité de service de réseau, et
- envoyer, à l'aide de la liaison de communication de contrôle, la qualité de service de réseau déterminée pour une communication entre le serveur d'application (AS-1,..., AS-n) et le dispositif utilisateur final (UE-1,..., UE-m) de l'expéditeur de notification d'application au serveur d'application (AS-1,..., AS-n).

10. Système selon la revendication 9, le processeur étant en outre configuré pour exécuter l'étape suivante :
- configurer la liaison de communication de la même manière qu'une liaison de communication pour transporter des données de trafic d'utilisateur entre le dispositif utilisateur final (UE-1,..., UE-m) et le serveur d'application (AS-1,..., AS-n), et se distinguant d'une telle liaison de communication à l'aide d'un type de QoS réservé dans la configuration.

11. Système selon la revendication 10, le processeur étant en outre configuré pour exécuter l'étape suivante :
- établir la liaison de communication de contrôle de sorte qu'elle partage avec une liaison de communication établie entre le dispositif utilisateur final (UE-1,..., UE- m) et le serveur d'application (AS-1,..., AS-n) une même liaison radio via l'interface hertzienne (103) et de sorte qu'elle soit transportée par l'intermédiaire d'au moins une liaison de réseau fixe séparée de la station de base radio (110) au serveur d'application (AS-1,..., AS-n).

12. Système selon la revendication 11, le processeur étant en outre configuré pour exécuter l'étape suivante :
- configurer chacune de la au moins une liaison de réseau fixe séparée de la station de base radio (110) au serveur d'application (AS-1, ..., AS-n) en tant que composition d'une liaison réseau fixe montante et d'une liaison réseau fixe descendante.

13. Système selon la revendication 12, le processeur étant en outre configuré pour exécuter l'étape suivante :
- configurer la liaison réseau fixe montante commençant au niveau d'une unité de traitement de liaison montante (115) de la station de base (110) et la liaison réseau fixe descendante se terminant dans une file d'attente (111-1,..., 111-n) de la station de base radio (110), la file d'attente étant couplée à une unité de traitement de liaison descendante (114) de la station de base radio (110), l'expéditeur de notification d'application (116) étant associé à la fois à la liaison réseau fixe montante et à la file d'attente (111-1,..., 111-n).

14. Système selon la revendication 12, le processeur étant en outre configuré pour exécuter l'étape suivante :
- configurer la liaison réseau fixe montante commençant au niveau de l'expéditeur de notification d'application (116) de la station de base radio (110) et la liaison réseau fixe descendante se terminant au niveau de l'expéditeur de notification d'application (116), l'expéditeur de notification d'application (116) étant associé à la fois à une unité de traitement de liaison descendante (114) de la station de base radio (110) et à une unité de traitement de liaison montante (115) de la station de base radio (110), de sorte que la liaison de communication de contrôle puisse être utilisée pour échanger des informations sur la qualité de service de réseau déterminée et des informations de contrôle relatives à l'application entre l'expéditeur de notification d'application (116), le serveur d'application (AS-1,..., As-n) et le dispositif utilisateur final (UE-1,..., UE-m).

15. Support lisible par ordinateur non transitoire doté d'un programme informatique comportant des codes de programme qui sont configurés, lorsque le programme informatique est chargé et exécuté par au moins un processeur qui est en connexion de communication avec un expéditeur de notification d'application, l'expéditeur de notification d'application étant installé au niveau d'une station de base radio d'un réseau radio et couplé à un planificateur de la station de base radio, pour exécuter au moins les étapes suivantes :
- accéder, à l'aide de l'expéditeur de notification d'application, à des données de réseau qui sont utilisées par le planificateur pour allouer les ressources de réseau à un dispositif utilisateur final,
- déterminer, à l'aide de l'expéditeur de notification d'application et sur la base des données de réseau qui ont été accédées, une qualité de service de réseau pour une communication entre un serveur d'application fonctionnant sur un centre de données, et un dispositif utilisateur final,
- établir une liaison de communication de contrôle entre le dispositif utilisateur final et le serveur d'application, la liaison de communication de contrôle comprenant au moins une liaison de réseau fixe séparée de la station de base radio au serveur d'application et étant configurée pour transporter uniquement des données relatives à la qualité de service de réseau, et
- envoyer, à l'aide de la liaison de communication de contrôle, la qualité de service de réseau déterminée pour une communication entre le serveur d'application et le dispositif utilisateur final de l'expéditeur de notification d'application au serveur d'application.
